(19) **Europäisches Patentamt European Patent Office Office européen des brevets**

(11) **EP 1 386 534 B1**

(12) **EUROPÄISCHE PATENTSCHRIFT**

(45) Veröffentlichungstag und Bekanntmachung des Hinweises auf die Patenterteilung:
**21.02.2007 Patentblatt 2007/08**

(51) Int Cl.:
*A01F 29/22* *(2006.01)*     *B26D 5/00* *(2006.01)*

(21) Anmeldenummer: **03016121.0**

(22) Anmeldetag: **16.07.2003**

(54) **Verfahren und Anordnung zur Bestimmung der Schärfe von Häckselmessern**

Method and device to determine the sharpness of chaff-cutting blades

Procédé et méthode pour déterminer l'acuité des lames de hacheuses

(84) Benannte Vertragsstaaten:
**AT BE BG CH CY CZ DE DK EE ES FI FR GB GR HU IE IT LI LU MC NL PT RO SE SI SK TR**

(30) Priorität: **30.07.2002 DE 10235919**

(43) Veröffentlichungstag der Anmeldung:
**04.02.2004 Patentblatt 2004/06**

(73) Patentinhaber: **DEERE & COMPANY Moline, Illinois 61265-8098 (US)**

(72) Erfinder:
• **Heinrich, André**
  **02708 Löbau (DE)**
• **Grimsel, Matthias**
  **01277 Dresden (DE)**
• **Bernhard, Gerd, Prof.Dr.-Ing.**
  **01728 Bannewitz/Hänichen (DE)**

(74) Vertreter: **Holst, Sönke et al**
  **Deere & Company,**
  **European Office,**
  **Patent Department**
  **68140 Mannheim (DE)**

(56) Entgegenhaltungen:
**DE-A- 4 023 114         DE-C- 19 903 153
US-A- 5 018 342         US-B1- 6 255 812**

**Beschreibung**

Die Erfindung betrifft ein Verfahren und eine Anordnung zur Bestimmung der Schärfe von Häckselmessern, insbesondere von selbstfahrenden Feldhäckslern und Anbauhäckslern, während des Häckselns.

Die Schärfe der Schneiden von Häckselmessern ist ausschlaggebend für die Qualität des Häckselgutes und den Energieverbrauch des Häckslers. Gegenwärtig wird die Schärfe der Messer überwiegend subjektiv, vor allem durch Sichtkontrolle der Häckselmesser oder durch Überprüfung der Qualität des Häckselgutes, bestimmt. Wie bei allen visuellen Beurteilungen sind die Erfahrungen der Bedienpersonen wesentlicher Maßstab.

Die Messer sind schlecht zugänglich. Der Häcksler wird zur Kontrolle angehalten. Die Abdeckungen werden entfernt. Die Messer werden im Ergebnis der Beurteilung entweder sofort geschärft oder erst nach einer weiteren Kontrolle. Nicht nur die Beurteilung ist subjektiv, auch der Kontrollzeitpunkt wird trotz aller Erfahrung immer subjektiv und damit willkürlich festgelegt. Die Kontrollen können aufgrund des Aufwandes immer nur in größeren zeitlichen Abständen durchgeführt werden. Der Schleifzeitpunkt kann bei diesem Vorgehen nicht optimal festgelegt werden.

Zum sofortigen Schärfen sind in vielen Häckslern heute bereits automatische Schleif- und Verstelleinrichtungen für die Gegenschneide eingebaut. Mit einer zuverlässigen Bestimmung der Messerschärfe noch während des Häckselns könnte der optimale Zeitpunkt des Schärfens exakter ermittelt und die Stillstandszeit auf die Zeit des Schärfens reduziert werden. Montagearbeiten auf dem Feld und das Unfallrisiko entfielen.

Einige Lösungen zur Bestimmung der Messerschärfe von Häckslern während des Häckselns sind bekannt.

Generell könnten die Leistung bzw. das Moment des Häckslerantriebs gemessen und hieraus die Schneidkräfte ermittelt werden. Das Moment ist aber nicht nur von der Messerschärfe, sondern auch vom Durchsatz abhängig. Diese Methode ist darum zu ungenau.

Gemäß der DE 199 03 153 A, die dem Oberbegriff der Ansprüche 1 und 6 entspricht, werden die auf die Gegenschneide wirkenden Schnittkräfte ermittelt. Es wird davon ausgegangen, dass bei einem Verschleiß zwangsläufig die Schnittkräfte steigen und damit ein Schwellenwert als Maß für die nunmehr nicht mehr ausreichende Messerschärfe festgelegt werden kann. Die Schnittkräfte (die auf die Gegenschneide einwirkenden Belastungen) werden in zwei Richtungen gemessen, einmal in Richtung des Erntegutstroms und zum anderen quer dazu. Es sind also immer wenigstens zwei Messeinrichtungen erforderlich, die zueinander bzw. zur Gegenschneide relativ exakt ausgerichtet sein müssen.

Die DE 40 23 113 A und DE 40 23 114 A gehen davon aus, dass sich die Schneidengeometrie in Abhängigkeit vom Verschleiß ändert und dadurch in einem induktiven Geber während des Vorbeilaufs unterschiedliche Spannungsimpulse induziert. Die geringe Messerdicke und der noch geringere Anteil an der Messerdicke, dessen Geometrie sich mit dem Verschleiß ändert, setzen der Messgenauigkeit enge Grenzen.

In der DE 198 12 271 A wird zur Messung des Abstands zwischen den Häckselmessern und der Gegenschneide vorgeschlagen, die Änderungen des magnetischen Flusses, der durch einen Permanentmagneten in der Gegenschneide erzeugt wird und sich durch die vorbeilaufenden Häckselmesser ändert, mittels einer Induktionsspule zu erfassen und deren Signale einer Frequenzanalyse zu unterziehen.

Aufgabe der Erfindung ist es, ein Verfahren und eine Anordnung zur Bestimmung der Schärfe von Häckselmessern anzugeben, mit dem der Zeitpunkt zum Schärfen der Messer während des Häckselns zuverlässig bestimmt werden kann.

Erfindungsgemäß wird die Aufgabe durch die Merkmale der Ansprüche 1 und 6 gelöst.

Vorteilhafte Ausgestaltungen der Erfindung sind in den Unteransprüchen beschrieben.

Bei dem Verfahren nach Anspruch 1 wird zu mindestens zwei Zeitpunkten mindestens eine charakteristische Kenngröße der Betriebsschwingung der Gegenschneide messtechnisch erfasst. Die erste Erfassung der Kenngröße erfolgt bei scharfer Schneidenpaarung. Anschließend wird die Kenngröße in Intervallen neu erfasst und die Änderung der Kenngröße zwischen der ersten und der aktuellen Erfassung ermittelt. Bei Überschreiten eines bestimmten Betrages der Abweichung zwischen den Werten der Kenngröße bei der ersten und der aktuellen Erfassung wird ein Ereignis ausgelöst. Das Ereignis kann die Ausgabe eines optischen oder/und akustischen Signals durch eine dafür vorgesehene Signaleinrichtung sein, die entweder im Fahrerhaus des Häckslers angebracht ist oder die der Fahrer bei sich trägt. Das Ereignis kann ebenfalls eine automatische Auslösung des Schleifprozesses während des Betriebes sein.

Es wurde gefunden, dass die Änderung des Schärfezustandes der Paarung Häckselmesser/Gegenschneide zu einer Veränderung des Schwingverhaltens sowohl der Häckselmesser als auch der Gegenschneide führt. Eigene Untersuchungen ergaben, dass diese Veränderungen messtechnisch erfassbar und für die Bestimmung des Schärfezustandes der Schneidenpaarung auswertbar sind. Überraschend zeigte sich, dass bestimmte Schwingungskenngrößen mit dem Schärfezustand korrelieren.

In einer einfachen Ausführungsform kann das erfindungsgemäße Verfahren in folgenden Schritten durchgeführt werden:

1. Erfassung und Analyse einer charakteristischen Kenngröße über eine oder mehrere Umdrehungen der Häckseltrommel zu Beginn des Arbeitsprozesses bei scharfer Schneidenpaarung,

2. Erfassung und Analyse der charakteristischen Kenngröße zu einem nach der letzten Messung liegenden Zeitpunkt,

3. Vergleich der Analyseergebnisse der ersten und der aktuellen Messung,

4. Bei Überschreitung einer häckselgutspezifischen Größe der Abweichung zwischen den Analyseergebnissen der aktuellen und der ersten Messung weiter bei 5, sonst weiter bei 2,

5. Auslösen eines Ereignisses.

Als charakteristische Kenngröße werden bevorzugt Beschleunigungen, Kräfte, Wege, Dehnungen, Schalldruck oder andere Schwingungskenngrößen, beispielsweise der Gegenschneide, eines oder mehrerer Häckselmesser, der Lager der Messerwelle oder anderer durch den Schnittvorgang zu mechanischen Schwingungen angeregter Bauteile des Häckslers ausgewertet. Sie können axial, radial oder tangential zur Messertrommel oder in jeder beliebigen anderen Raumrichtung erfasst werden. Ihre Analyse kann im Zeit- oder Frequenzbereich erfolgen.

Das erfindungsgemäße Verfahren kann mittels einer kompakten Anordnung durchgeführt werden, die robust, billig und platzsparend als Zusatzgerät oder als Bestandteil des Häckslers ausgeführt sein kann. In einer vorteilhaften Ausgestaltung der Erfindung verfügt die erfindungsgemäße Anordnung über adaptive Fähigkeiten, wodurch eine weitgehende Automatisierung der Schärfebestimmung ohne aufwändige und zeitraubende Referenzmessung und ohne manuellen Eingriff möglich ist.

Die erfindungsgemäße Anordnung enthält mindestens einen Sensor zur Messung mechanischer Größen, eine zur Erfassung und Analyse solcher Messwerte geeignete Verarbeitungseinrichtung und einen Signalgeber zur Ereignisanzeige. Besonders vorteilhaft können Beschleunigungsaufnehmer, Klopfsensoren, mit einem Permanentmagneten in der Gegenschneide zusammenwirkende Magnetfeldsensoren, insbesondere Induktionspulen oder Halleffektsensoren, oder Dehnungsmessstreifen als Sensoren, ein digitaler Signalprozessor (DSP) oder ein Bordcomputer als Verarbeitungseinrichtung und eine Kontrollleuchte, ein Summer oder eine LCD-Anzeige als Signalgeber verwendet werden. Vorteilhaft verfügt die Verarbeitungseinrichtung über die Möglichkeit, mindestens einen diskreten Wert zumindest temporär zu speichern. Der Sensor, die Verarbeitungseinrichtung und der Signalgeber verfügen über Mittel zum Datenaustausch bzw. zur Ansteuerung. Diese Mittel können Kabel oder Transceiver für Funk- oder Infrarot-Signale sein. Vorteilhaft können die Funktionen der Analyse und der Ereignisausgabe von einem ohnehin im Häcksler vorhandenen Bordcomputer übernommen werden.

Die Erfindung wird nachfolgend anhand von Figuren näher erläutert. Dabei zeigen

Fig. 1 eine Prinzipdarstellung des Häckselwerks mit einem Sensor,
Fig. 2 eine schematische Darstellung des erfindungsgemäßen Verfahrens,
Fig. 3 die Frequenzspektren der charakteristischen Kenngröße bei scharfen und bei stumpfen Messern,
Fig. 4 das Frequenzspektrum der charakteristischen Kenngröße bei scharfen Messern und eine Wichtungsfunktion, und
Fig. 5 das Zeitsignal der charakteristischen Kenngröße sowie zwei Ergebnisse der Filterung dieses Zeitsignals mit zwei unterschiedlichen Bandpassfiltern.

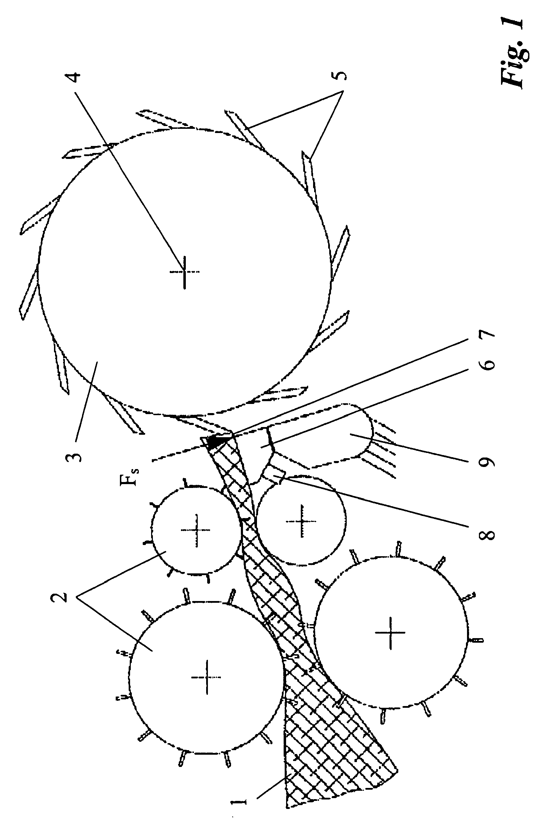

In der Fig. 1 ist der Aufbau eines Häckselwerks und eine vorteilhafte Anbringung eines Sensors (8) zur Messwerterfassung schematisch dargestellt. Das Häckselgut ( 1) wird durch Vorpresswalzen (2) verdichtet und zu dem zwischen den Messern (5) der um ihre Achse (4) rotierenden Häckseltrommel (3) und der Gegenschneide (6) befindlichen Schneidspalt (7) gefördert.

Die Messer (5) der Häckseltrommel (3) üben auf das Häckselgut (1) eine Schnittkraft $F_s$ aus. Die sich im Häckselgut aufbauende Reaktionskraft regt die Messer (5), die Häckseltrommel (3) und diese die Lager ihrer Achse (4) zu Schwingungen an.

Durch das Häckselgut (1) wird die Schnittkraft $F_s$ auf die Gegenschneide (6) und die Gegenschneidenlagerung (9) übertragen, wodurch die Gegenschneide (6) und die Gegenschneidenlagerung (9) zu Schwingungen angeregt werden.

Vorteilhaft kann nun zur Messung einer Kenngröße der Schwingung der Gegenschneide (6) ein Sensor (8) an einer geschützten Stelle der Unter- oder Hinterseite der Gegenschneide (6) oder der Gegenschneidenlagerung (9) angebracht sein. Die vom Sensor (8) aufgenommenen Signale werden mit geeigneten Mitteln, wie Kabel oder Funksender, an eine Verarbeitungseinrichtung weitergeleitet. Die beschriebene Anordnung des Sensors (8) ist besonders vorteilhaft, wenn ein Beschleunigungssensor verwendet wird.

Ebenso ist es möglich, die Schwingungen der Messer (5) oder der Häckseltrommel (3) zu messen. Für die erstere Variante ist die Verwendung von Dehnmessstreifen als Sensor vorteilhaft, die direkt auf der Rückseite eines oder mehrerer Messer (5) appliziert werden. Die zweite Variante lässt sich vorteilhaft durch die Verwendung von Kraftsensoren realisieren, die beispielsweise in eines der Lager der Achse (4) der Häckseltrommel (3) integriert sein können.

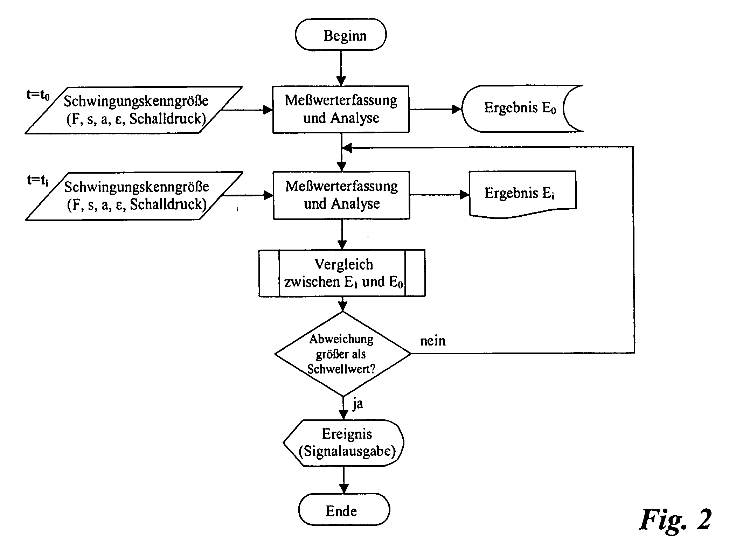

In Fig. 2 ist das erfindungsgemäße Verfahren schematisch dargestellt. In einer einfachen Form umfasst es folgende Schritte:

Erstens wird zu Beginn eine charakteristische Kenngröße der Schwingung, z. B. Beschleunigung, Kraft, Weg, Dehnung oder Schalldruck, erfasst, analysiert und das Ergebnis der Analyse, z. B. der zeitliche Verlauf oder ein oder mehrere Parameter der charakteristischen Kenngröße, gespeichert. Bei Ermittlung von Parametern wird nur eine sehr geringe Speicherkapazität benötigt.

Zweitens wird die charakteristische Kenngröße nochmals erfasst und analysiert. Eine Speicherung der Ergebnisse dieser Analyse ist nicht notwendig, da sie im nächsten Schritt sofort weiterverarbeitet werden.

Drittens werden die Verläufe bzw. der oder die Parameter der beiden Messungen miteinander verglichen.

Viertens wird bei Überschreitung eines Schwellwertes der Abweichung der Verläufe oder der Parameter ein Ereignis ausgelöst (fünfter Verfahrensschritt), anderenfalls zum zweiten Verfahrensschritt zurückgekehrt.

Alternativ kann die Analyse der Messdaten zur Gewinnung des oder der Parameter beider Erfassungen auch Teil des dritten Verfahrensschritts sein. In diesem Fall wird eine höhere Speicherkapazität benötigt, da der zeitliche Verlauf der charakteristischen Kenngröße aus beiden Verfahrensschritten zwischengespeichert werden muss.

Die Analyse kann im Zeit- oder Frequenzbereich erfolgen. Dies wird anhand zweier Beispiele näher erläutert:

1. Ausführungsbeispiel: Frequenzbereich, mit zwei relevanten Frequenzbändern

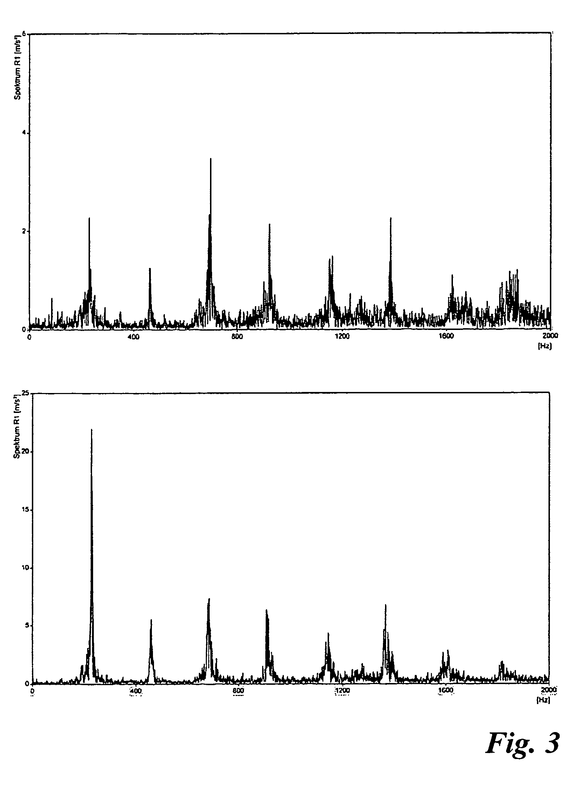

In Fig. 3 sind die Frequenzspektren der charakteristischen Kenngröße dargestellt. Dabei zeigt das obere Diagramm das Spektrum bei scharfen Messern (5) und das untere Diagramm das Spektrum bei stumpfen Messern (5). In beiden Spektren sind mehrere Peaks in einem Intervall von ca. 230 Hz deutlich zu erkennen. Dabei entsprechen die Peaks der Antwort der Gegenschneide bzw. sind harmonische Oberschwingungen. Das qualitative Verhältnis von Grund- und Oberschwingungen ändert sich mit abnehmender Schärfe der Messer (5). Abhängig vom Massendurchsatz können von Messung zu Messung auch quantitative Änderungen auftreten. Diese haben jedoch keinen Einfluss auf das Verhältnis zweier Peaks einer einzigen Messung zueinander. Zur Vergleichbarkeit der Spektren zweier verschiedener Messungen ist jedoch eine Normierung, wie nachfolgend beschrieben, sinnvoll.

Kalibrierung bei scharfen Messern

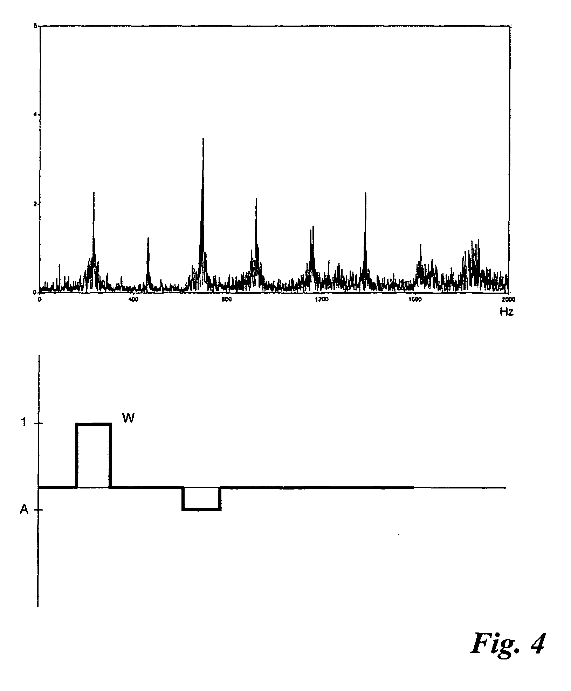

Aus dem Messsignal $M_0$ bei scharfen Messern wird das Frequenzspektrum $S_0$ des Messsignals im Bereich von 0-1 kHz ermittelt. Dieses ist im oberen Diagramm von Fig. 4 dargestellt. Anschließend wird das Frequenzspektrum normiert, so dass gilt:

$$\Sigma(S_{0i}) = 1.$$

Dann wird eine Wichtungsfunktion W ermittelt mit:

$$W(f) = \{1 \text{ für } f_1^u < f < f_1^o; \ -A \text{ für } f_2^u < f < f_2^o; \ \text{sonst } 0\},$$

wobei die tiefgestellten Indizes 1 und 2 das 1. bzw. 2. Frequenzband und die hochgestellten Indizes u und o die untere bzw. obere Grenze des jeweiligen Bandes bezeichnen. Eine solche Wichtungsfunktion W(f) ist im unteren Diagramm von Fig. 4 dargestellt. Bei geschickter Wahl von A gilt:

$$K_0 = \Sigma(W \cdot S_{0i}) = 0;$$

Der Wert von A läßt sich entweder iterativ oder nach der Vorschrift

$$A = -\Sigma S_{0i}(f = f_1^u \ldots f_1^o) / \Sigma S_{0i}(f = f_2^u \ldots f_2^o)$$

ermitteln, wodurch bei entsprechender Implementierung in die Verarbeitungseinrichtung eine autonome Arbeitsweise der erfindungsgemäßen Anordnung realisiert werden kann.

Bewertung der aktuellen Schneidenschärfe

Nach einem vorgegebenen Intervall, das durch Arbeitsstunden oder Umdrehungen der Häckseltrommel (3) vorgegeben sein kann, wird ein neues Messsignal $M_1$ aufgezeichnet, dessen Spektrum $S_i$ ermittelt und ebenfalls normiert wird, so dass gilt:

$$\Sigma (S_{1i}) = 1 .$$

$$K_1 = \Sigma (W \cdot S_{1i})$$

$K_1$ ist größer als Null und ist ein Indiz für die aktuelle Messerschärfe. Bei Überschreiten eines bestimmten Grenzwertes für $K_1$, z. B. $K_1 > 1$, wird ein Ereignis ausgelöst. Das Ereignis kann die Ausgabe eines Signals oder/und das Auslösen eines Schleifvorgangs sein.

Wird der Grenzwert nicht überschritten, so wird nach Ablauf eines weiteren Intervalls ein weiteres Messsignal aufgezeichnet und entsprechend weiter verfahren.

2. Ausführungsbeispiel: Zeitbereich

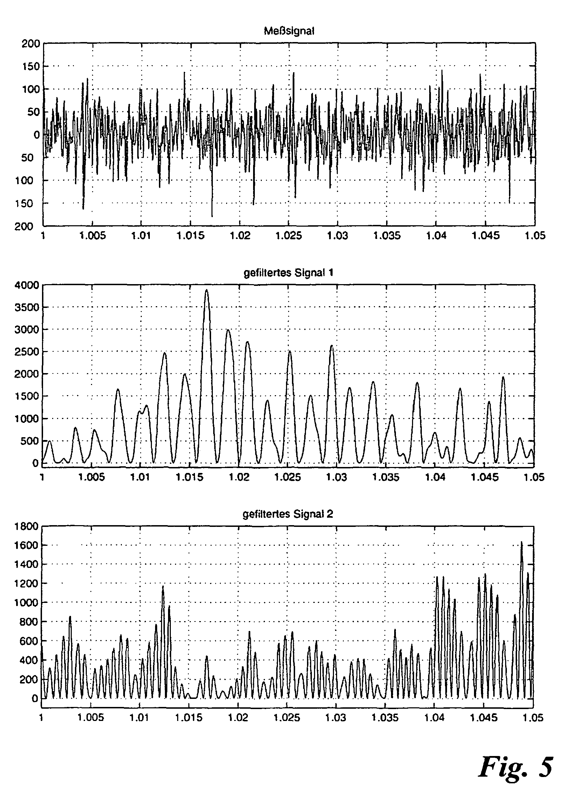

Das Zeitsignal der charakteristischen Kenngröße, z. B. der Beschleunigung der Gegenschneide, wird durch einen Sensor über einen bestimmten Zeitraum gemessen. Ein solches Zeitsignal ist in Fig. 5 oben dargestellt. Das Beschleunigungssignal wird dann mittels Bandpass gefiltert. Das Signal wird dabei in mindestens zwei Frequenzbändern gefiltert. Die Frequenzbänder, die für die Schärfeinformation relevant sind, müssen vorher bekannt sein. Die Lage der relevanten Frequenzbänder ist maschinen- und häckselgutabhängig.

In Fig. 5 Mitte und unten sind die Ergebnisse der Filterung mit zwei verschiedenen Bandpassfiltern dargestellt. Der mittleren Darstellung liegt eine Filterung mit den Grenzfrequenzen $f_1{}^u$ = 150 Hz und $f_1{}^o$ = 300 Hz zu Grunde. Bei der unteren Darstellung wurde ein Filter mit $f_1{}^u$ = 650 Hz und $f_1{}^o$ = 800 Hz verwendet.

Die beiden gefilterten Signale werden vor der Integration quadriert, um die negativen Anteile des Signals positiv zu machen. Alternativ kann auch der Absolutwert gebildet werden. Die erhaltenen Signale werden dann über einen definierten Zeitraum integriert. Der Vergleich der Integrale miteinander (bei zwei Frequenzbändern z.B. durch Division) ergibt den Kennwert K, der sich signifikant mit der Schärfe der Messer ändert.

Bei scharfen Messern wird ein Kennwert $K_0$ gebildet. Während des Betriebes wird der aktuelle Wert $K_1$ gebildet und mit $K_0$ verglichen. Bei Überschreiten eines Schwellenwertes wird ein Signal oder/und das Schärfen ausgelöst.

3. Ausführungsbeispiel: Anordnung mit PC

An der Gegenschneide eines Häckslers ist ein Beschleunigungssensor angebracht. Sein Signalausgang ist über einen Messverstärker an einen Personal Computer (PC) mit Hardware zur Messwerterfassung und Signalausgabe sowie Software zur Messwertanalyse und Steuerung externer Geräte angeschlossen. An einen Analogausgang des PC ist eine Kontrollleuchte angeschlossen, die im Fahrerhaus des Häckslers im Sichtbereich des Fahrers angebracht ist.

Vor Beginn der Häckselarbeiten wird bei scharfer Schneidenpaarung eine Referenzmessung mit dem zu verarbeitenden Häckselgut durchgeführt. Erfasst wird der Verlauf der Beschleunigung der Gegenschneide über ca. 100 Umdrehungen der Häckseltrommel. Das gemessene Beschleunigungssignal wird im PC gespeichert. Anschließend wird es Fourier-transformiert.

Alternativ kann die Fouriertransformation auch online (während der Messung) erfolgen, so dass kein Speicherplatz für das Zeitsignal benötigt wird.

In dem so erhaltenen Frequenzspektrum werden mindestens zwei Bereiche (Frequenzbänder) ermittelt, die die höchsten Peaks aufweisen. Die Lage der relevanten Frequenzbänder ist maschinen- und häckselgutabhängig. Anschließend werden die Maximalwerte oder Integralwerte des Spektrums in den relevanten Frequenzbändern zueinander ins Verhältnis gesetzt. Dieser Wert wird abgespeichert.

Die Verwendung adaptiver Bandfilter ermöglicht es, in nachfolgenden Messungen nur die relevanten Frequenzbänder zu erfassen, wodurch Rechenleistung und benötigter Speicherplatz signifikant verringert werden können. Die Einstellung der Grenzfrequenzen für die Bandfilter kann vom Maschinenhersteller häckselgutspezifisch vorgenommen werden.

Nach einem Arbeitszyklus von ca. 10.000 bis 50.000 Umdrehungen der Häckseltrommel wird wiederum die Beschleunigung der Gegenschneide über mehrere Umdrehungen der Messertrommel gemessen, gespeichert und anschließend wie bei der ersten Messung analysiert. Wird das Signal online Fourier-transformiert, so kann auch hier auf die Speicherung des Zeitsignals verzichtet werden.

Der neue Wert des Verhältnisses der lokalen Maxima in jedem der beiden relevanten Frequenzbänder wird mit dem gespeicherten Wert der Erstmessung verglichen. Beträgt die relative Differenz beider Werte weniger als 15%, so wird kein Ereignis ausgelöst, sondern ein weiterer Zyklus von ca. 10.000 bis 50.000 Umdrehungen der Häckseltrommel durchgeführt, bevor eine weitere Messung durchgeführt wird. Beträgt die Abweichung beider Werte voneinander mehr als 15%, so wird eine elektrische Spannung auf einen Analogausgang des PCs gelegt. An diesen Ausgang ist eine im Fahrerhaus des Häckslers im Bereich des Armaturenbretts angebrachte Kontrollleuchte angeschlossen. Die Kontrollleuchte leuchtet auf. Der Fahrer sieht die leuchtende Kontrollleuchte und stoppt den Häckselprozess, um die Schleifvorrichtung zu betätigen. Das Analyseprogramm wird zurückgesetzt. Das Verfahren kann nach dem Schärfen von vorn durchgeführt werden.

4. Ausführungsbeispiel: Anordnung mit Bordcomputer

Der Bordcomputer des Häckslers ist so programmiert, dass er den Schritt der Analyse, den Schritt des Vergleichs und den Schritt der Ereignisauslösung des erfindungsgemäßen Verfahrens durchführen kann.

Als Sensor wird ein Mikrofon verwendet. Der Datenaustausch zwischen Bordcomputer und Mikrofon erfolgt über Funk. Hierfür verfügt das Mikrofon über einen Funksender und der Bordcomputer über einen Funkempfänger. Im Armaturenbrett des Häckslers sind eine Kontrollleuchte und ein Summer integriert, die vom Bordcomputer per CAN-Bus angesprochen werden, wenn das Kriterium für das Nachschleifen der Häckselmesser erreicht ist.

Der Bordcomputer verfügt über einen Schalter zur Benutzereingabe. Der Fahrer signalisiert dem Bordcomputer den Arbeitsbeginn durch Betätigen dieses Schalters. Der Bordcomputer beginnt mit der Messwerterfassung. Es werden 1000 Umdrehungen der Häckseltrommel online analysiert und das Verhältnis der beiden höchsten lokalen Maxima des Frequenzspektrums im Bordcomputer abgespeichert.

Anschließend wird ohne Unterbrechung jeder folgende Block von je 1000 Umdrehungen online analysiert und das Ergebnis mit dem gespeicherten Wert verglichen. Weicht der aktuelle Wert um weniger als 15% von dem gespeicherten Wert ab, so wird er verworfen und der nächste Block analysiert. Bei einer Abweichung von mehr als 15% wird ein Signal an den Summer und die Kontrollleuchte ausgegeben.

Der Summer gibt daraufhin ein akustisches, die Kontrollleuchte ein optisches Signal an den Fahrer aus. Wenn der Fahrer das Signal durch Betätigen des dafür am Bordcomputer vorgesehenen Schalters bestätigt, verstummt das akustische Signal. Das optische Signal bleibt bestehen, bis das Schärfen der Messer durchgeführt wurde.

In einer anderen Ausführung bewirkt der Bordcomputer automatisch die Durchführung des Schärfvorgangs während des Häckselns. Die Aktivität der Schleifeinrichtung wird dem Fahrer durch ein optisches Signal angezeigt. Nach Beendigung des Schärfens erlischt das optische Signal.

**Patentansprüche**

1. Verfahren zur Bestimmung der Schärfe von Häckselmessern (5) eines Häckselaggregats, insbesondere zur Bestimmung der Veränderung des Schärfezustandes der Häckselmesser (5) zwischen mindestens zwei Zeitpunkten, wobei zu den mindestens zwei Zeitpunkten wenigstens eine charakteristische Kenngröße der Betriebsschwingung eines Bauelements des Häckselaggregates gemessen wird, **dadurch gekennzeichnet, dass** für jede Messung das Verhältnis der Schwingungsanteile wenigstens zweier Frequenzbänder des Messsignals bzw. deren Peaks zueinander ermittelt wird und dass die Veränderung dieses Verhältnisses zwischen den beiden Messungen ausgewertet wird.

2. Verfahren nach Anspruch 1, **gekennzeichnet durch** die Verfahrensschritte:

   a. Erstmessung der charakteristischen Kenngröße bei scharfen Häckselmessern (5) und messtechnische Analyse der Anteile mindestens zweier Frequenzbereiche des Messsignals zueinander,
   b. Folgemessung der charakteristischen Kenngröße nach einem wählbaren Intervall wie beispielsweise Zeitdauer oder Umdrehungen der Häckseltrommel, das größer oder gleich Null ist, und messtechnische Analyse der Anteile der gleichen Frequenzbereiche wie in Schritt a. des Messsignals zueinander,
   c. Ermittlung eines Vergleichswertes aus den Analyseergebnissen der Schritte a. und b., beispielsweise durch Bildung einer Differenz oder eines Quotienten oder durch Anwendung einer aus der Erstmessung gewonnenen Wichtungsfunktion auf die Folgemessung,

d. Vergleich des Vergleichswertes aus Schritt c. mit einem wählbaren Vorgabewert, bei Unterschreiten dieses Vorgabewertes Rückkehr zu Schritt b, anderenfalls

e. Auslösen eines Ereignisses.

**3.** Verfahren nach einem der Ansprüche 1 bis 2, **dadurch gekennzeichnet, dass** die Analyse der charakteristischen Kenngröße im Zeit- oder Frequenzbereich erfolgt.

**4.** Verfahren nach einem der Ansprüche 1 bis 3, **dadurch gekennzeichnet, dass** die charakteristische Kenngröße eine Beschleunigung, eine Dehnung oder ein Schalldruck ist.

**5.** Verfahren nach einem der Ansprüche 1 bis 4, **dadurch gekennzeichnet, dass** die charakteristische Kenngröße an der Gegenschneide oder deren Lagerung, an einem oder mehreren Häckselmessern, an der Häckseltrommel selbst oder an der Häckseltrommellagerung gemessen wird.

**6.** Anordnung zur Bestimmung der Schärfe von Häckselmessern (5) eines Häckselaggregats, mit einem dem Häckselaggregat zugeordneten Sensor (8), der eingerichtet ist, beim Betrieb durch die Häckselmesser (5) bewirkte Schwingungen in einem Bauelement des Häckselaggregats zu erfassen, **dadurch gekennzeichnet, dass** eine Verarbeitungseinrichtung vorgesehen ist, die betreibbar ist, die vom Sensor (8) erfassten Schwingungssignale einer Frequenzanalyse zu unterziehen und auf deren Basis eine Signalgröße zu erzeugen, die eine Information über die Schärfe der Häckselmesser (5) enthält.

**7.** Anordnung nach Anspruch 6, **dadurch gekennzeichnet, dass** die Verarbeitungseinrichtung betreibbar ist, für zwei Messungen das Verhältnis der Schwingungsanteile wenigstens zweier Frequenzbänder des Messsignals bzw. deren Peaks zueinander zu ermitteln und die Veränderung dieses Verhältnisses zwischen den beiden Messungen auszuwerten.

**Claims**

**1.** Method for determining the sharpness of chopping blades (5) of a chaff cutting assembly, in particular for determining the change in the state of sharpness of the chopping blades (5) between at least two time points, wherein at least one characteristic magnitude of the vibration of a structural element of the chaff cutting assembly during operation is measured at the at least two time points, **characterised in that** for each measurement the relationship of the vibration components of at least two frequency bands of the measuring signal or the peaks thereof to one another is determined, and that the change in this relationship between the two measurements is evaluated.

**2.** Method according to Claim 1, **characterised by** the method steps:

a. conduct initial measurement of the characteristic magnitude in the case of sharp chopping blades (5) and measurement analysis of the components of at least two frequency ranges of the measuring signal in relation to one another;

b. conduct subsequent measurement of the characteristic magnitude after a selectable interval such as a time period or rotations of the chopper drum, for example, that is greater than or equal to zero, and measurement analysis of the components of the same frequency ranges as in step a. of the measuring signal in relation to one another;

c. determine a comparison value from the analysis results of steps a. and b., e.g. by formation of a difference or a quotient or by application of a weighting function obtained from the initial measurement to the subsequent measurement;

d. compare the comparison value from step c. with a selectable preset value, and when the value lies below this preset value, return to step b., otherwise

e. actuate an event.

**3.** Method according to one of Claims 1 to 2, **characterised in that** the analysis of the characteristic magnitude occurs in the time or frequency range.

**4.** Method according to one of Claims 1 to 3, **characterised in that** the characteristic magnitude is an acceleration, an extension or a sound pressure.

**5.** Method according to one of Claims 1 to 4, **characterised in that** the characteristic magnitude is measured at the counter-blade or its mounting, at one or more chopping blades, at the chopping drum itself or at the chopping drum mounting.

**6.** Assembly for determining the sharpness of chopping blades (5) of a chaff cutting assembly, with a sensor (8), which is associated with the chaff cutting assembly and is fitted to detect vibrations caused by the chopping blades (5) during operation in a structural element of the chaff cutting assembly, **characterised in that** a processing system is provided, which can be operated to subject the vibration signals detected by the sensor (8) to a frequency analysis and generate a signal magnitude on the basis thereof, which contains information concerning the sharpness of the chopping blades (5).

**7.** Assembly according to Claim 6, **characterised in that** the processing system can be operated to determine for two measurements the relationship of the vibration components of at least two frequency bands of the measuring signal or the peaks thereof in relation to one another and to evaluate the change in this relationship between the two measurements.

**Revendications**

**1.** Procédé pour déterminer le tranchant des lames de hachage (5) d'un groupe de hachage, en particulier pour déterminer la variation de l'état d'affûtage des lames de hachage (5) entre au moins deux moments, sachant que, à ces au moins deux moments, est mesurée une grandeur caractéristique de la vibration en cours de service d'un élément du groupe de hachage, **caractérisé en ce que**, pour chaque mesure, est déterminé le rapport entre les parts de vibration d'au moins deux bandes de fréquence du signal de mesure ou des pics de celles-ci, et **en ce que** la variation de ce rapport entre les deux mesures est analysée.

**2.** Procédé selon la revendication 1, **caractérisé par** les étapes suivantes :

a) première mesure de la grandeur caractéristique sur des lames de hachage (5) affûtées et analyse, par la technique de mesure, entre les parts d'au moins deux zones de fréquence du signal de mesure ;
b) mesure consécutive de la grandeur caractéristique après un intervalle de temps sélectionnable, tel que la durée ou les rotations du tambour de hachage, qui est supérieur ou égal à zéro, et analyse, par la technique de mesure, entre les parts des mêmes zones de fréquence que dans l'étape a) du signal de mesure ;
c) détermination d'une valeur comparative à partir des résultats d'analyse des étapes a) et b), par exemple par la formation d'une différence ou d'un quotient ou par l'application à la mesure consécutive d'une fonction de pondération obtenue à partir de la première mesure ;
d) comparaison de la valeur comparative obtenue dans l'étape c) avec une valeur par défaut sélectionnable, si la valeur comparative est inférieure à cette valeur par défaut retour à l'étape b), sinon
e) déclenchement d'un changement d'état.

**3.** Procédé selon l'une quelconque des revendications 1 à 2, **caractérisé en ce que** l'analyse de la grandeur caractéristique est effectuée dans une plage de temps ou une plage de fréquences.

**4.** Procédé selon l'une quelconque des revendications 1 à 3, **caractérisé en ce que** la grandeur caractéristique est une accélération, un allongement ou une pression acoustique.

**5.** Procédé selon l'une quelconque des revendications 1 à 4, **caractérisé en ce que** la grandeur caractéristique est mesurée sur la contre-lame ou sur le palier de celle-ci, sur une ou plusieurs lames de hachage, sur le tambour de hachage lui-même ou sur le palier du tambour de hachage.

**6.** Dispositif pour déterminer le tranchant des lames de hachage (5) d'un groupe de hachage, comportant un capteur (8), qui est associé au groupe de hachage et qui est conçu pour enregistrer des vibrations générées en cours de service par les lames de hachage (5) dans un élément du groupe de hachage, **caractérisé en ce qu'**il est prévu un dispositif de traitement, qui peut être utilisé pour soumettre les signaux d'oscillation enregistrés par le capteur (8) à une analyse de fréquence et pour générer, sur la base de celle-ci, une grandeur de signal qui contient une information sur le tranchant des lames de hachage (5).

**7.** Dispositif selon la revendication 6, **caractérisé en ce que** le dispositif de traitement peut être utilisé pour déterminer, pour deux mesures, le rapport entre les parts d'oscillation d'au moins deux bandes de fréquence du signal de mesure ou des pics de celles-ci, et pour analyser la variation de ce rapport entre les deux mesures.

*Fig. 1*

EP 1 386 534 B1

EP 1 386 534 B1

$t=t_0$ Schwingungskenngröße (F, s, a, $\varepsilon$, Schalldruck)

Beginn

Meßwerterfassung und Analyse

Ergebnis $E_0$

$t=t_i$ Schwingungskenngröße (F, s, a, $\varepsilon$, Schalldruck)

Meßwerterfassung und Analyse

Ergebnis $E_i$

Vergleich zwischen $E_i$ und $E_0$

Abweichung größer als Schwellwert?

nein

ja

Ereignis (Signalausgabe)

Ende

*Fig. 2*

*Fig. 3*

*Fig. 4*

*Fig. 5*